# FASCICULE DE BREVET EUROPEEN

(11) **EP 4 204 773 B1**
(45) Date de publication et mention de la délivrance du brevet: **22.10.2025**
(21) Numéro de dépôt: 21831081.1
(22) Date de dépôt: 25.11.2021
(51) Int. Cl.: G01F 23/00, G01N 29/04, G01F 23/296, G01F 23/292, G01H 9/00

(54) **PROCÉDÉ ET SYSTÈME POUR LA DÉTERMINATION TEMPORELLE D'UN NIVEAU D'INTERFACE DE PHASE D'UN FLUIDE POLYPHASIQUE PRÉSENT DANS UNE CONDUITE VERTICALE**
VERFAHREN UND SYSTEM ZUR ZEITLICHEN BESTIMMUNG EINES PEGELS EINER PHASENSCHNITTSTELLE EINES MEHRPHASIGEN FLUIDS IN EINER VERTIKALEN LEITUNG
METHOD AND SYSTEM FOR DETERMINING OVER TIME A LEVEL OF A PHASE INTERFACE OF A MULTIPHASE FLUID PRESENT IN A VERTICAL PIPE

(30) Priorité: 30.11.2020 FR 2012360
(43) Date de publication de la demande: 05.07.2023
(73) Titulaire: SAIPEM S.A., 92800 Puteaux (FR)
(72) Inventeur: MAUGÉ, Rudy, 78120 RAMBOUILLET (FR); ROLAND, Paul, 75006 PARIS (FR)
(74) Mandataire: Cabinet Beau de Loménie
(86) Numéro de dépôt international: PCT/FR2021/052093
(87) Numéro de publication internationale: WO 2022/112717

(56) Documents cités:
- EP-A1- 3 111 038
- EP-A2- 0 385 788
- WO-A1-2009/100087
- WO-A2-2015/025216
- US-A1- 2014 160 888
- US-A1- 2016 146 662
- US-A1- 2020 291 772
- US-B2- 9 052 230

## Description

### Domaine Technique

L'invention se rapporte au domaine général de la détection d'interfaces de phase d'un fluide polyphasique circulant dans des conduites verticales, notamment dans des séparateurs gravitaires ou des conduites montantes (i.e. risers) caténaires utilisés dans le domaine de la production d'hydrocarbures, par exemple de pétrole et de gaz.

### Technique antérieure

L'extraction des puits de production d'hydrocarbures sous-marin génère un mélange polyphasique (eau, pétrole, gaz et sable) qu'il est nécessaire de traiter pour ne récupérer que ce qui va être utilisé, à savoir le pétrole et le gaz.

Généralement, ce mélange polyphasique est remonté à bord d'un FPSO (pour « Floating Production Storage Offloading » en anglais, à savoir un support flottant de stockage, de production et de déchargement) pour y être traité en vue de séparer le pétrole proprement dit, de l'eau, du gaz, et d'éventuels composants solides.

Le pétrole, une fois séparé, est alors stocké à bord, le gaz est lavé, puis envoyé vers les turbines à gaz pour la production de l'électricité et de la chaleur nécessaire à bord, puis le surplus est réinjecté dans le réservoir du champ pétrolier de manière à le remettre en pression. L'eau, après avoir été libérée des particules solides en suspension, est soit rejetée en mer après extraction des éventuelles particules d'huile, soit réinjectée elle aussi dans le réservoir. Enfin, les particules solides extraites, qui ne représentent que des quantités minimes, sont pour partie retraitées et recyclées sur place pour être rejetées en mer ou dans des bassins spéciaux, et pour partie envoyées à terre pour traitement et stockage et/ou réinjectées dans le sous-sol par le puits.

L'un des procédés connus de séparation de l'eau et de l'huile contenus dans le mélange polyphasique extrait du puits de production consiste à utiliser un réservoir de très grand volume, en général de forme cylindrique : le pétrole entre à une extrémité du réservoir et chemine le long de celui-ci pour permettre aux différentes phases du mélange de se séparer naturellement par gravité et atteindre l'autre extrémité du réservoir. Ce type de séparateur ci-après dénommé « séparateur gravitaire » est en général utilisé pour du pétrole brut contenant également du gaz, le gaz étant alors récupéré en partie haute du réservoir, l'eau et le sable en partie basse, et le pétrole (huile) en partie intermédiaire.

A cet effet, il est connu de recourir à des séparateurs gravitaires sous-marin installés au fond de la mer. On connaît ainsi du document WO 2015/114247 un séparateur gravitaire sous-marin comprenant notamment une pluralité de conduites cylindriques formant des réservoirs dans lesquels circule le mélange polyphasique extrait du puits de production. Au cours de cette circulation, les différentes phases du mélange se séparent naturellement par gravité : l'eau repose au fond du réservoir, l'huile est au-dessus de l'eau et le gaz est au-dessus de l'huile. En sortie des conduites, l'eau est typiquement récupérée pour être traitée avant d'être réinjectée dans le puits par des pompes d'injection d'eau, tandis que les phases huileuse et gazeuse sont acheminées en surface vers le FPSO.

Lorsque les différentes phases du mélange polyphasique présent dans le réservoir du séparateur gravitaire se sont séparées, il est important de mesurer avec précision le niveau d'interface de phase dans le réservoir, c'est-à-dire le niveau dans le réservoir entre deux phases superposées (interface eau/huile et interface huile/gaz). Le résultat de cette mesure permet en effet d'assurer une parfaite régulation du débit des pompes d'injection d'eau, ce qui améliore le fonctionnement du séparateur.

La mesure du niveau d'interface de phase dans le réservoir d'un séparateur gravitaire est généralement réalisée par des capteurs de niveau à rayons gamma comme décrit notamment dans les publications EP 1,314,006 et EP 2,329,234. Or, ce type de capteur met en œuvre des sources de rayonnement radioactives qui sont préjudiciables à l'environnement sous-marin ainsi que sur le plan d'hygiène et de sécurité pour le personnel. De plus, les détecteurs associés à ces capteurs sont des composants complexes à coût élevé et fiabilité faible selon les opérateurs, ce qui rend les résultats des mesures imprécis.

La mesure du niveau d'interface de phase peut également être réalisée à l'aide d'un capteur à ultrasons tel que décrits notamment dans les publications WO 2018/065128 et WO 2009/063194. Dans ces publications, un capteur émet des impulsions ultrasoniques qui sont réfléchies par la surface externe du réservoir. Le temps de parcours du signal ultrasonique réfléchi est directement proportionnel à la distance parcourue. Si la forme du réservoir est connue, on peut alors en déduire les niveaux d'interface.

On connaît encore la publication US 6,943,566 qui décrit le principe de mesure de niveau qui se base sur la variation de capacité d'un condensateur. Avec ce type de mesure, la sonde et la paroi du réservoir forment un condensateur dont la capacité dépend de la quantité de fluide présent dans le réservoir.

On connaît aussi la publication US 9,052,230 qui décrit un procédé pour imager le volume intérieur d'un récipient associé à un processus industriel et détecter les caractéristiques physiques et chimiques d'un milieu présent dans le récipient, sur lequel agit le processus industriel. Un exemple de domaine d'application est celui du processus de cokéfaction au cours duquel un certain nombre de conditions indésirables peuvent apparaître dans le récipient. En pratique, le procédé détecte une interface en identifiant qualitativement une énergie spectrale plus importante (par comparaison visuelle des spectres). Au-dessus et en dessous de ladite interface, les énergies des spectres sont plus faibles et n'ont rien de remarquables qui les distinguent. La détection de la position de l'interface manque ainsi de précision.

### Exposé de l'invention

La présente invention a pour objet de proposer un procédé permettant de suivre en temps réel le niveau d'interface de phase d'un fluide polyphasique présent dans une conduite verticale qui ne présente pas les inconvénients des procédés de l'art antérieur.

Conformément à l'invention, ce but est atteint grâce à un procédé pour la détermination temporelle d'un niveau d'interface de phase d'un fluide polyphasique présent dans une conduite verticale, comprenant
- la mise en place d'un capteur distribué à fibre optique comprenant un câble à fibre optique enroulé en spirale autour de la conduite et couplé optiquement à un interrogateur DAS ;
- à partir des données acquises par l'interrogateur DAS, la détermination de la densité spectrale de puissance sur une durée prédéterminée et pour chaque point d'une longueur discrétisée du câble à fibre optique ;
- l'intégration de la densité spectrale de puissance sur une bande prédéfinie de fréquences pour chaque point de la longueur discrétisée du câble à fibre optique ; et
- la mise sous forme matricielle des résultats de l'intégration de la densité spectrale de puissance afin de déterminer au moins un niveau d'interface du fluide polyphasique.

Le procédé selon l'invention est remarquable en ce qu'il permet de déterminer en temps réel et en continu à partir d'un capteur distribué à fibre optique enroulé autour de la conduite verticale le niveau d'interface de phase du fluide polyphasique présent dans la conduite. En outre, ce procédé présente les avantages d'être non intrusif pour le fluide et facile à installer sur la conduite verticale. Aucune maintenance n'est d'ailleurs nécessaire. De plus, le capteur distribué à fibre optique qui est utilisé peut également servir à monitorer d'autres paramètres de l'écoulement de fluide, tels que la pression, les vibrations, les éventuelles fuites, la composition, l'intensité des turbulences, etc.).

Le procédé selon l'invention est également remarquable en ce que c'est la variation verticale de l'énergie, calculée à partir des analyses spectrales et quantifiée entre les fluides, qui permet d'identifier la présence d'une ou plusieurs interfaces. En d'autres termes, pour chaque position « en z » dans la conduite (donnée par le pas d'enroulement de la fibre) et au cours du temps t, le procédé selon l'invention permet d'obtenir une valeur qui caractérise le comportement énergétique du fluide.

Ainsi, il est possible d'identifier le niveau du ou des interfaces par la présence de rupture(s) de pente dans le profil vertical de l'énergie.

D'autre part, les analyses spectrales révèlent une densité d'énergie plus importante dans les fluides denses et donnent ainsi un caractère remarquable et quantifiable à ce qui se passe en dessus et en dessous des interfaces. La précision de ces analyses permet de voir l'influence de la pression hydrostatique avec une augmentation de l'énergie dû au poids de la colonne des fluides. Ainsi, il est possible de quantifier avec précision la ou les positions d'une ou des interfaces et l'épaisseur d'une émulsion, si présente. Nous obtenons en quelque sorte une image précise de la répartition des fluides.

Le procédé selon l'invention présente ainsi de nombreux avantages. Il permet un suivi en temps réel et multi-paramètres à partir d'un capteur distribué, de type fibre optique, qui est enroulé autour d'un séparateur gravitaire. Il permet également d'obtenir des images en temps réel des interfaces et de la répartition des fluides et des émulsions dans un séparateur gravitaire. Il permet encore de caractériser l'évolution des propriétés physiques des fluides (tels que eau, huiles, gaz et gaz critiques) et notamment la quantité de gaz dans les liquides via une analyse de la vitesse du son au sein de chaque fluide (ceci afin de donner des éléments de performance du séparateur au cours du temps). Il permet encore d'assurer un suivi en parallèle de la pression tout le long du séparateur avec la possibilité de suivre l'évolution de la pression hydrostatique en fonction de l'altitude dans le séparateur.

Selon une application du procédé, la conduite verticale est un appareil à pression de type séparateur.

Selon une autre application du procédé, la conduite verticale est une conduite montante (i.e. un riser) caténaire.

L'intégration de la densité spectrale de puissance peut être réalisée sur une bande de fréquences comprise entre 10 et 1000 Hz. Quant à la mesure de la densité spectrale de puissance, elle peut être réalisée sur une durée de l'ordre de 1s.

Le câble à fibre optique peut être enroulé en spirale autour de la conduite en formant des spires jointives, ce qui confère une grande précision dans la détermination du niveau d'interface de phase. Alternativement, le câble à fibre optique peut être enroulé en spirale autour de la conduite en formant des spires espacées les unes des autres d'un même pas non nul.

Le procédé peut comprendre en outre la construction d'une image représentative de la matrice des résultats de l'intégration de la densité spectrale de puissance afin de déterminer visuellement au moins un niveau d'interface du fluide polyphasique.

Corrélativement, l'invention a également pour objet un système pour la détermination temporelle d'un niveau d'interface de phase d'un fluide polyphasique présent dans une conduite verticale, comprenant :
- un capteur distribué à fibre optique comprenant un câble à fibre optique destiné à être enroulé en spirale autour de la conduite et un interrogateur DAS couplé optiquement au câble à fibre optique ;
- des moyens pour déterminer, à partir des données acquises de l'interrogateur DAS, la densité spectrale de puissance sur une durée prédéterminée et pour chaque point d'une longueur discrétisée du câble à fibre optique ;
- des moyens pour intégrer la densité spectrale de puissance sur une bande prédéfinie de fréquences pour chaque point de la longueur discrétisée du câble à fibre optique ; et
- des moyens pour mettre sous forme matricielle les résultats de l'intégration de la densité spectrale de puissance afin déterminer au moins un niveau d'interface du système polyphasique.

### Brève description des dessins

[Fig. 1] La figure 1 est une vue schématique d'un exemple de conduite verticale équipée d'un système selon l'invention pour la détermination temporelle d'un niveau d'interface de phase d'un fluide polyphasique s'écoulant dans la conduite.
[Fig. 2A] La figure 2A montre un exemple de mise en œuvre d'une étape du procédé selon l'invention.
[Fig. 2B] La figure 2B montre un exemple de mise en œuvre d'une autre étape du procédé selon l'invention.
[Fig. 2C] La figure 2C montre un exemple de mise en œuvre d'encore une autre étape du procédé selon l'invention.

### Description des modes de réalisation

L'invention concerne un procédé et un système pour la détermination temporelle d'un niveau d'interface de phase d'un fluide polyphasique présent dans une conduite verticale.

Par « détermination temporelle », on entend ici que le niveau d'interface de phase est déterminé en fonction du temps de façon à pouvoir suivre son évolution dans le temps.

Par « fluide polyphasique », on entend ici tout système polyphasique comprenant différentes phases séparées en plusieurs strates superposées d'un mélange initialement polyphasique (notamment eau, gaz et huile).

Par « conduite verticale », on entend ici toute portion de conduite verticale dans laquelle stagne ou s'écoule le fluide polyphasique. Par exemple, la conduite verticale peut être une conduite d'un séparateur gravitaire ou une conduite montante (également appelée riser) caténaire utilisée dans la production sous-marine d'hydrocarbures.

Le procédé selon l'invention prévoit de recourir à la technologie DAS (pour « Distributed Acoustic Sensing » ou « Détection Acoustique Distribuée » en français) pour déterminer les niveaux d'interface d'un fluide polyphasique présent dans une telle conduite verticale.

La détection acoustique distribuée par fibre optique (DAS) est un type connu de détection dans lequel une fibre optique est déployée comme fibre de détection pour fournir la détection de l'activité acoustique sur toute sa longueur. Typiquement, une ou plusieurs impulsions laser sont envoyées à travers la fibre optique, et en analysant le rayonnement rétrodiffusé, la fibre peut être divisée en une pluralité de portions de détection discrètes qui peuvent être contigües.

Dans chaque portion de détection discrète, des perturbations mécaniques de la fibre optique, par exemple des déformations dues à des ondes acoustiques incidentes, provoquent une variation des propriétés du rayonnement qui est rétrodiffusé à partir de cette portion de détection. Cette variation peut être détectée et analysée et utilisée pour donner une mesure de la perturbation de la fibre au niveau de cette portion de détection.

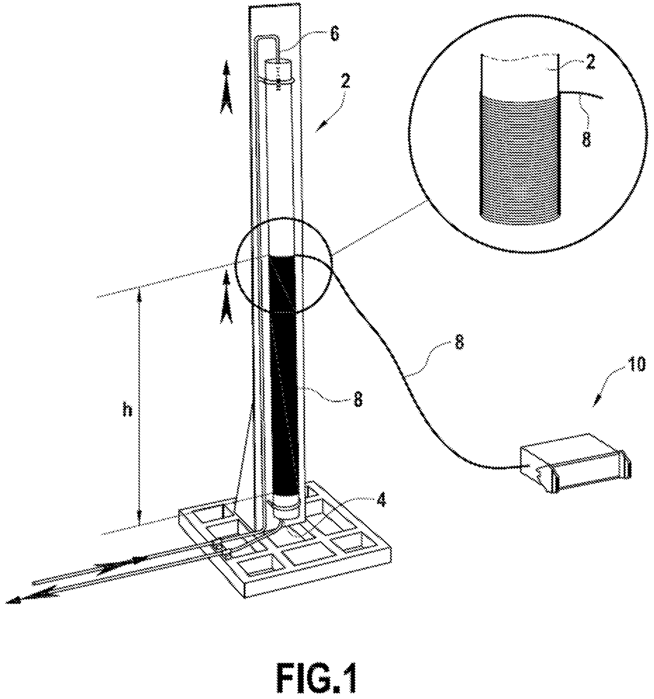

La figure 1 représente de façon schématique un exemple d'application du procédé selon l'invention à une conduite verticale 2 à l'intérieur de laquelle s'écoule de haut en bas un fluide polyphasique.

Dans cet exemple d'application, la conduite 2 est fermée en son extrémité basse par un bouchon muni d'une sortie de vidange 4 pour le fluide polyphasique. L'entrée du fluide polyphasique est réalisée par le haut de la conduite par un tuyau 6. Des robinets (non représentés) permettent de contrôler les débits de fluide entrant et sortant de la conduite 2.

Un câble à fibre optique 8 est enroulé et collé en spirale autour de la conduite 2 depuis le bas de celle-ci sur une hauteur h de 85cm environ. La fibre optique est enroulée en formant des spires jointives (le pas entre les spires adjacentes est nul) et est couplée optiquement à un interrogateur DAS 10.

Bien entendu, en fonction de la précision de mesure souhaitée pour le niveau d'interface de phase, il est possible d'enrouler le câble à fibre optique de sorte à ce qu'elle forme des spires espacées les unes des autres d'un même pas non nul. Plus le pas sera important, moins la précision de mesure sera grande.

De même, la précision de la mesure dépend également de la discrétisation spatiale choisie pour la fibre optique. Dans l'exemple illustré, il est choisi une discrétisation spatiale de la fibre optique de 1 m, ce qui correspond à une résolution spatiale verticale le long de la conduite d'environ 3 mm (le câble de fibre optique ayant ici un diamètre de 0,9 mm).

Par ailleurs, on choisit pour cette application une référence de 0% de la hauteur de la fibre optique pour le bas de la conduite 2, une référence de 50% de la hauteur de la fibre optique pour le milieu de la conduite, et une référence de 100% de la hauteur de la fibre optique pour le haut de la conduite.

Le fluide polyphasique qui est mis en circulation dans la conduite 2 de haut en bas est ici un mélange liquide/gaz constitué d'eau et d'air.

Le procédé selon l'invention prévoit, à partir des données brutes acquises par l'interrogateur 10 couplé à la fibre optique, de déterminer la densité spectrale de puissance sur une durée prédéterminée et pour chaque point de la longueur discrétisée du câble à fibre optique.

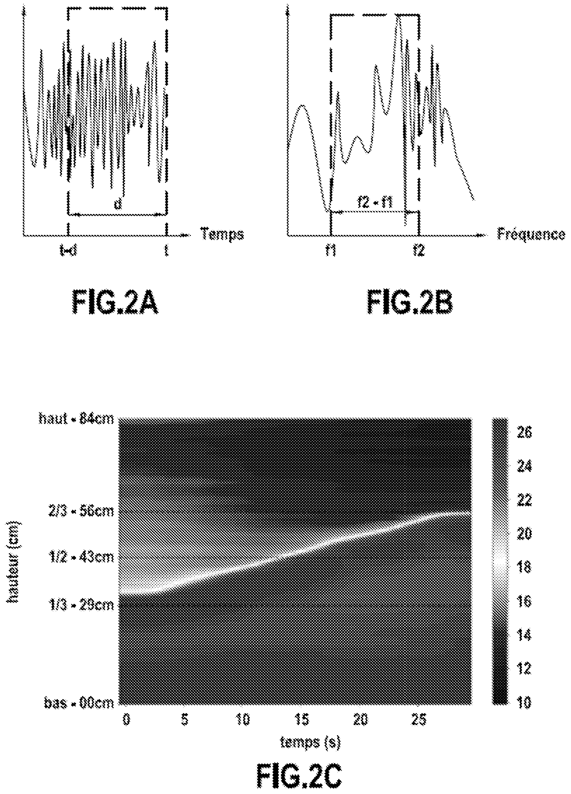

Les données brutes acquises par l'interrogateur DAS sont les variations temporelles de déformation de la fibre optique. Ces données permettent de calculer la densité spectrale de puissance sur une durée prédéterminée d (typiquement de l'ordre de la seconde) tel que représenté sur la figure 2A. Ce calcul est réalisé tout le long de la fibre optique pour chaque point discrétisé i de celle-ci. De façon connue, la densité spectrale de puissance est obtenue par le calcul du carré du module de la transformée de Fourier de la déformation de la fibre optique au point i, multiplié par la durée d'intégration d.

L'étape suivante du procédé selon l'invention consiste à intégrer la densité spectrale de puissance ainsi calculée sur une bande prédéfinie de fréquences f1, f2 (typiquement comprise entre 10 et 1000 Hz) pour chaque point i de la longueur discrétisée du câble à fibre optique. Cette intégration est représentée par la courbe de la figure 2B.

Les résultats de l'intégration des densités spectrales de puissance sur toute la longueur de la fibre optique sont alors stockés sous forme d'une même matrice 2D afin d'être visualisés.

Le procédé selon l'invention peut alors prévoir la construction d'une image représentative de cette matrice des résultats de l'intégration des densités spectrales de puissance afin de pouvoir déterminer visuellement les niveaux d'interface du fluide polyphasique.

Un exemple de représentation graphique de la matrice des résultats de l'intégration des densités spectrales de puissance est illustré par la figure 2C.

Sur cette figure, l'axe des abscisses représente le temps (ici en secondes de t=0s à t=30s) et l'axe des ordonnées caractérise la hauteur h (ici en cm de 0cm à 85cm) sur la conduite verticale de la fibre optique enroulée. La couleur est associée à l'intensité de la densité spectrale de puissance (selon une échelle algorithmique).

Cette figure permet ainsi de pouvoir aisément visualiser l'évolution temporelle de l'interface de phase eau/air du mélange polyphasique s'écoulant dans la conduite verticale de la figure 1. En effet, cette interface de phase est matérialisée sur cette figure 2C par la limite entre les deux couleurs (elle est ici à environ 30cm de hauteur à t=0s pour atteindre environ 56cm à t=30s).

On constate ici que le niveau d'interface de phase varie en fonction du temps. Il pourrait bien entendu être sensiblement constant au cours du temps.

Par ailleurs, la détermination temporelle du niveau d'interface de phase a été obtenue ici à partir d'une représentation graphique de la matrice des résultats de l'intégration des densités spectrales de puissance.

Alternativement, il est possible de prévoir qu'un algorithme permette, à partir de la matrice, de déterminer directement et de suivre l'évolution des niveaux d'interface de phase en fonction du temps.

## Revendications

1. procédé pour la détermination temporelle d'un niveau d'interface de phase d'un fluide polyphasique présent dans une conduite verticale (2), comprenant :
- la mise en place d'un capteur distribué à fibre optique comprenant un câble à fibre optique (8) enroulé en spirale autour de la conduite et couplé optiquement à un interrogateur DAS (10) ;
**caractérisé en ce que** le procédé comprend les étapes suivantes:
- à partir des données acquises par l'interrogateur DAS, la détermination de la densité spectrale de puissance sur une durée prédéterminée (d) et pour chaque point (i) d'une longueur discrétisée du câble à fibre optique ;
- l'intégration de la densité spectrale de puissance sur une bande prédéfinie de fréquences (f1, f2) pour chaque point de la longueur discrétisée du câble à fibre optique ; et
- la mise sous forme matricielle des résultats de l'intégration de la densité spectrale de puissance afin de déterminer au moins un niveau d'interface du fluide polyphasique.

2. Procédé selon la revendication 1, dans lequel la conduite verticale est un appareil à pression de type séparateur.

3. Procédé selon la revendication 1, dans lequel la conduite verticale est une conduite montante caténaire.

4. Procédé selon l'une quelconque des revendications 1 à 3, dans lequel l'intégration de la densité spectrale de puissance est réalisée sur une bande de fréquences comprise entre 10 et 1000 Hz.

5. Procédé selon l'une quelconque des revendications 1 à 4, dans lequel la mesure de la densité spectrale de puissance est réalisée sur une durée de l'ordre de 1s.

6. Procédé selon l'une quelconque des revendications 1 à 3, dans lequel le câble à fibre optique est enroulé en spirale autour de la conduite en formant des spires jointives.

7. Procédé selon l'une quelconque des revendications 1 à 3, dans lequel le câble à fibre optique est enroulé en spirale autour de la conduite en formant des spires espacées les unes des autres d'un même pas non nul.

8. Procédé selon l'une quelconque des revendications 1 à 7, comprenant en outre la construction d'une image représentative de la matrice des résultats de l'intégration de la densité spectrale de puissance afin de déterminer visuellement au moins un niveau d'interface du fluide polyphasique.

9. Système pour la détermination temporelle d'un niveau d'interface de phase d'un fluide polyphasique présent dans une conduite verticale (2), comprenant :
- un capteur distribué à fibre optique comprenant un câble à fibre optique (8) destiné à être enroulé en spirale autour de la conduite et un interrogateur DAS (10) couplé optiquement au câble à fibre optique ;
**caractérisé par** :
- des moyens pour déterminer, à partir des données acquises de l'interrogateur DAS, la densité spectrale de puissance sur une durée prédéterminée (d) et pour chaque point (i) d'une longueur discrétisée du câble à fibre optique ;
- des moyens pour intégrer la densité spectrale de puissance sur une bande prédéfinie de fréquences (f1, f2) pour chaque point de la longueur discrétisée du câble à fibre optique ; et
- des moyens pour mettre sous forme matricielle les résultats de l'intégration de la densité spectrale de puissance afin déterminer au moins un niveau d'interface du système polyphasique.

## Patentansprüche

1. Verfahren zur zeitlichen Bestimmung eines Pegels einer Phasenschnittstelle eines in einer vertikalen Leitung (2) vorhandenen mehrphasigen Fluids, umfassend:
- das Platzieren eines faseroptischen Mehrpunktsensors, der ein spiralförmig um die Leitung gewickeltes und optisch mit einem DAS-Abfragegerät (10) gekoppeltes Glasfaserkabel (8) umfasst (10);
**dadurch gekennzeichnet, dass** das Verfahren die folgenden Schritte umfasst:
- Bestimmen, anhand der vom DAS-Abfragegerät erfassten Daten, der spektralen Leistungsdichte über einen vorbestimmten Zeitraum (d) und für jeden Punkt (i) einer diskretisierten Länge des Glasfaserkabels;
- Integrieren der spektralen Leistungsdichte über einen vordefinierten Frequenzbereich (f1, f2) für jeden Punkt der diskretisierten Länge des Glasfaserkabels; und
- Darstellen der Ergebnisse der Integration der spektralen Leistungsdichte in Form einer Matrix, um mindestens einen Pegel einer Phasenschnittstelle des mehrphasigen Fluids zu bestimmen.

2. Verfahren nach Anspruch 1, wobei die vertikale Leitung eine Druckvorrichtung vom Typ eines Separators ist.

3. Verfahren nach Anspruch 1, wobei die vertikale Leitung eine Steigleitung vom Typ catenary riser ist.

4. Verfahren nach einem der Ansprüche 1 bis 3, wobei die Integration der spektralen Leistungsdichte über einen Frequenzbereich zwischen 10 und 1000 Hz erfolgt.

5. Verfahren nach einem der Ansprüche 1 bis 4, wobei die Messung der spektralen Leistungsdichte über einen Zeitraum in der Größenordnung von 1 s erfolgt.

6. Verfahren nach einem der Ansprüche 1 bis 3, wobei das Glasfaserkabel spiralförmig um die Leitung gewickelt ist und dabei aneinanderliegende Windungen bildet.

7. Verfahren nach einem der Ansprüche 1 bis 3, wobei das Glasfaserkabel spiralförmig um die Leitung gewickelt ist und dabei Windungen bildet, die voneinander in einem gleichen, von Null verschiedenen Abstand beabstandet sind.

8. Verfahren nach einem der Ansprüche 1 bis 7, das ferner die Erstellung eines repräsentativen Bildes der Matrix der Ergebnisse der Integration der spektralen Leistungsdichte umfasst, um mindestens einen Schnittstellenpegel des mehrphasigen Fluids visuell zu bestimmen.

9. System zur zeitlichen Bestimmung eines Pegels einer Phasenschnittstelle eines in einer vertikalen Leitung (2) vorhandenen mehrphasigen Fluids, umfassend:
- einen faseroptischen Mehrpunktsensor, der ein spiralförmig um die Leitung gewickeltes und optisch mit einem DAS-Abfragegerät (10) gekoppeltes Glasfaserkabel (8) umfasst;
**gekennzeichnet durch**
- Mittel, um anhand der vom DAS-Abfragegerät erfassten Daten die spektrale Leistungsdichte über einen vorbestimmten Zeitraum (d) und für jeden Punkt (i) einer diskretisierten Länge des Glasfaserkabels zu bestimmen;
- Mittel, um die spektrale Leistungsdichte über einen vordefinierten Frequenzbereich (f1, f2) für jeden Punkt der diskretisierten Länge des Glasfaserkabels zu integrieren; und
- Mittel, um die Ergebnisse der Integration der spektralen Leistungsdichte in Matrixform darzustellen, um mindestens einen Pegel einer Phasenschnittstelle des mehrphasigen Systems zu bestimmen.

## Claims

1. A method for the time determination of a phase interface level of a multiphase fluid present in a vertical pipe (2), comprising:
- placing a distributed optical fiber sensor comprising an optical fiber cable (8) wound in a spiral around the pipe and optically coupled to a DAS interrogator (10);
**characterized in that** the method comprises the following steps:
- determining, from the data acquired by the DAS interrogator, the power spectral density over a predetermined duration (d) and for each point (i) of a discretized length of the optical fiber cable;
- integrating the power spectral density over a predefined frequency band (f1, f2) for each point of the discretized length of the optical fiber cable; and
- setting the results of the integration of the power spectral density in matrix form in order to determine at least one interface level of the multiphase fluid.

2. The method according to claim 1, wherein the vertical pipe is a pressure apparatus of the separator type.

3. The method according to claim 1, wherein the vertical pipe is a catenary riser.

4. The method according to any one of claims 1 to 3, wherein the integration of the power spectral density is carried out over a frequency band comprised between 10 and 1,000 Hz.

5. The method according to any one of claims 1 to 4, wherein the measurement of the power spectral density is carried out over a period of the order of 1s.

6. The method according to any one of claims 1 to 3, wherein the optical fiber cable is spirally wound around the pipe by forming contiguous turns.

7. The method according to any one of claims 1 to 3, wherein the optical fiber cable is spirally wound around the pipe by forming turns spaced from each other by the same non-zero pitch.

8. The method according to any one of claims 1 to 7, further comprising the construction of a representative image of the matrix of the results of the integration of the power spectral density in order to visually determine at least one interface level of multiphase fluid.

9. A system for the time determination of a phase interface level of a multiphase fluid present in a vertical pipe (2), comprising:
- a distributed optical fiber sensor comprising an optical fiber cable (8) intended to be spirally wound around the pipe and a DAS interrogator (10) optically coupled to the optical fiber cable;
**characterized by**:
- means for determining, from the data acquired from the DAS interrogator, the power spectral density over a predetermined duration (d) and for each point (i) of a discretized length of the optical fiber cable;
- means for integrating the power spectral density over a predefined frequency band (f1, f2) for each point of the discretized length of the optical fiber cable; and
- means for setting in matrix form the results of the integration of the power spectral density in order to determine at least one interface level of the multiphase system.
